## Europäisches Patentamt
## European Patent Office
## Office européen des brevets

(11) Numéro de publication: **0 034 072**
**B1**

(12) **FASCICULE DE BREVET EUROPEEN**

(45) Date de publication du fascicule du brevet: **11.07.84**

(51) Int. Cl.³: **B 60 J 5/06**

(21) Numéro de dépôt: **81400019.6**

(22) Date de dépôt: **08.01.81**

(54) **Joint à rattrapage de jeu variable.**

(30) Priorité: **07.02.80 FR 8002668**

(43) Date de publication de la demande:
**19.08.81 Bulletin 81/33**

(45) Mention de la délivrance du brevet:
**11.07.84 Bulletin 84/28**

(84) Etats contractants désignés:
**DE GB IT NL SE**

(56) Documents cités:
**FR - A - 2 280 522**
**US - A - 3 727 349**

(73) Titulaire: **REGIE NATIONALE DES USINES RENAULT**
**Boîte postale 103 8-10 avenue Emile Zola**
**F-92109 Boulogne-Billancourt (FR)**

(72) Inventeur: **Debret, Alain**
**97, Boulevard Valmy**
**F-92700 Colombes (FR)**
Inventeur: **Soetaert, Guy**
**1, rue L.V. Beethoven**
**F-78340 Les Clayes-sous-Bois (FR)**

Courier Press, Leamington Spa, England.

## Description

La présente invention se rapporte à un joint à rattrapage de jeu variable disposé entre l'élément support, qui peut être une tôle de carrosserie automobile, et la pièce à monter qui est fixée suivant un plan différent du plan de joint.

On connaît des joints intercalés entre les accessoires et la carrosserie sur laquelle ils sont fixés afin d'éviter le contact de ces accessoires qui peuvent être métalliques avec la tôlerie, ce qui pourrait provoquer une corrosion locale de la carrosserie. De plus, ces joints assurent une certaine étanchéité à l'eau. Lorsqu'il s'agit d'accessoires dont la fixation se fait sur le plan de pose du joint, celui-ci se trouve alors serré entre les deux éléments et il n'y a pas de problème particulier de présentation et d'étanchéité (voir par exemple le brevet FR 2 280 522). Par contre, lorsque, pour des raisons techniques, il est nécessaire de disposer le joint entre deux surfaces en regard l'une de l'autre d'un élément support et d'une pièce à monter, cette dernière comportant une semelle de fixation destinée à être serrée sur l'élément support selon un plan non parallèle au plan de joint entre lesdites surfaces, par exemple sensiblement perpendiculaire à ce dernier, les différents réglages fonctionnels peuvent amener la surface de la pièce à monter à ne plus être totalement en contact avec la surface correspondante de l'élément support, ce qui fait que le joint n'est plus tenu correctement et qu'il ne peut plus assurer ses fonctions de présentation et d'étanchéité.

Le but de la présente invention est donc de réaliser un joint à rattrapage de jeu variable qui permette de fixer une pièce sur un plan différent du plan de joint tout en assurant la protection, la présentation et l'étanchéité voulues. Ce but est atteint par le joint défini dans la partie caractérisante de la revendication 1.

Selon un mode de réalisation préféré de l'invention, les languettes sont constituées d'un élément bombé à profil circulaire raccordé au plan du joint par un seul côté et le joint en matière plastique est obtenu directement par moulage.

Un tel joint suivant l'invention présente l'avantage d'épouser les écarts de jeu entre élément support et la pièce à fixer et permet de plus d'assurer la protection, la présentation et l'étanchéité voulues. D'autres caractéristiques et avantages de la présente invention ressortiront de la description qui suit de modes de réalisation donnés à titre d'exemple, en référence aux dessins annexés sur lesquels:

— la figure 1 représente un véhicule sur lequel est monté un joint à rattrapage de jeu selon l'invention;

— la figure 2 représente le dispositif de la figure 1 dans lequel est monté le joint à rattrapage de jeu;

— la figure 3 est une vue de dessus du dispositif de la figure 2 suivant la flèche III de la figure 2;

— la figure 4 est une vue de face du joint à rattrapage de jeu comme il est disposé dans la figure 2;

— la figure 5 est une section VV de la figure 4;

— les figures 6, 7, 8 et 9 représentent différents cas de montage du joint à rattrapage de jeu de l'exemple des figures précédentes dans des vues suivant la flèche VI de la figure 3;

— la figure 10 représente en vue de face un autre exemple de réalisation du joint à rattrapage de jeu.

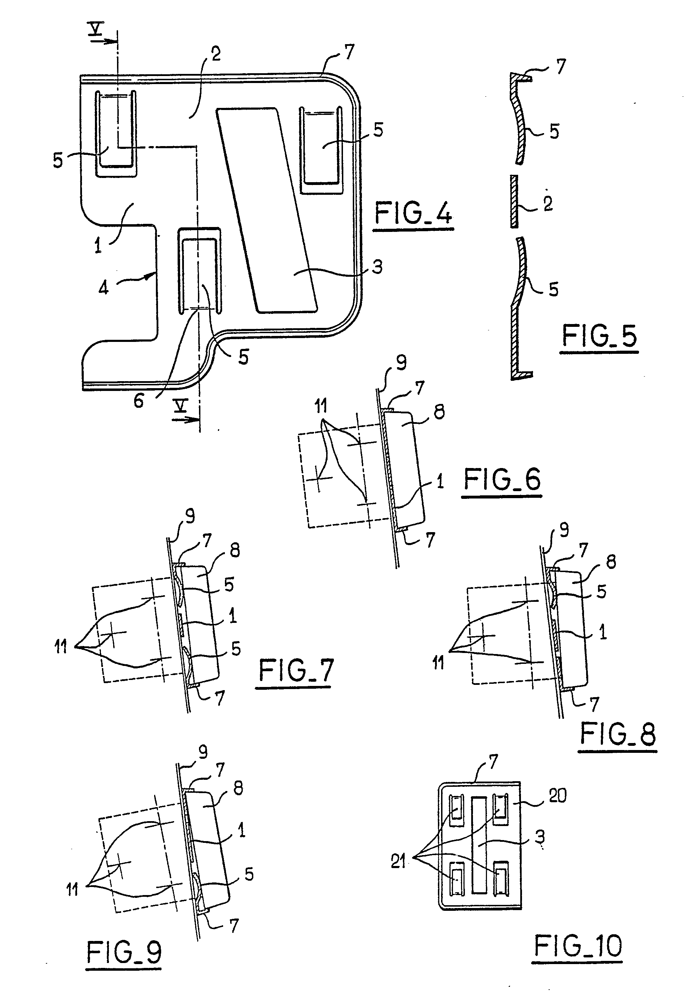

Le joint à rattrapage de jeu 1 représenté sur les figures 4 et 5 est en matière plastique et comprend une plaque 2 faisant office de plan de joint dans laquelle sont disposées une lumière 3 de passage de la semelle de fixation et une découpe 4 adaptée au dispositif dans lequel le joint 1 doit être monté. De plus, cette plaque 2 comporte trois languettes 5 élastiques de rattrapage de jeu qui sont constituées d'un élément rectangulaire bombé à profil circulaire raccordé à la plaque 2 par un seul côté 6. Enfin, cette plaque 2 est entourée d'une lèvre périphérique 7 qui, dans l'exemple de la figure, est située sur seulement trois côtés.

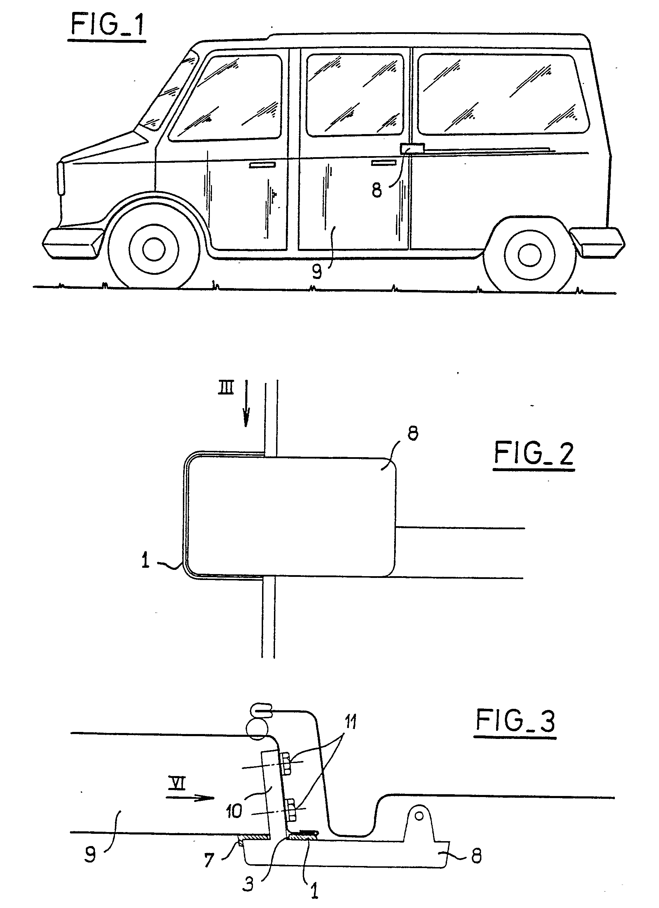

Le véhicule représenté sur la figure 1 comporte un mécanisme de débattement de porte coulissante qui utilise une pièce de liaison 8. Cette pièce de liaison est vue plus en détail sur les figures 2 et 3 où l'on distingue le joint 1 à rattrapage de jeu disposé entre la pièce de liaison 8 et la porte coulissante 9. La lumière 3 du joint 1 laisse passer la semelle de fixation 10 de la pièce de liaison 8, cette semelle 10 étant reliée à ladite porte coulissante 9 par les trois vis 11. La lèvre périphérique 7 du joint 1 entoure la pièce de liaison 8 sur trois côtés.

Le joint à rattrapage de jeu variable est ainsi destiné à être interposé entre deux surfaces en regard l'une de l'autre d'un élément support, 9, en particulier une tôle de carrosserie automobile, et d'une pièce à monter 8:

— la pièce à monter 8 comportant une semelle de fixation 10 destinée à être serrée sur l'élément support 9 selon un plan non parallèle au plan de joint entre lesdites surfaces;

— le joint étant constitué d'un plaque 2 comportant:

a) une lumière 3 de passage de la semelle de fixation 10;

b) au moins trois languettes élastiques 5 faisant saillie d'une première face de la plaque 2 et destinées à prendre appui sur la pièce 8 pour plaquer la deuxième face de la plaque 2 contre l'élément support 9;

c) une lèvre périphérique 7 faisant saillie de ladite première face de la plaque 2 et destinée à entourer au moins partiellement la pièce à monter pour faire office de barrière d'étanchéité et de cache du plan de joint, la hauteur de ladite lèvre 7 étant supérieur à la valeur maximale possible du jeu entre la pièce à monter 8 et l'élément support 9.

Les figures 6, 7, 8 et 9 représentent les différents cas possibles du montage du joint 1 sur la porte coulissante 9. Dans le cas de la figure 6, le jeu entre la pièce de liaison 8 et la porte coulissante 9 a une valeur constante égale à l'épaisseur du joint 1. Dans le cas de la figure 7, le jeu entre la pièce de liaison 8 et la porte coulissante 9 a une valeur constante qui est la valeur maximale possible du dispositif considéré. Dans ce cas, la lèvre périphérique 7 vient encore recouvrir la pièce de liaison 8, ce qui permet au joint 1 de remplir ses fonctions de présentation et d'étanchéité.

Dans le cas de la figure 8, le jeu entre la pièce de liaison 8 et la porte coulissante 9 a une valeur variable allant d'une valeur minimale égale à l'épaisseur du joint 1 à une valeur maximale possible dans le dispositif considéré. Ce jeu maximal se trouve à la partie haute de la pièce de liaison 8 et, dans ce cas, la lèvre périphérique 7 recouvre encore la pièce de liaison 8. Dans le cas de la figure 9, le jeu entre la pièce de liaison 8 et la porte coulissante 9 a une valeur variable comprise entre des limites identiques à celles du cas de la figure 8. Dans ce cas, le jeu maximal se trouve à la partie basse de la pièce de liaison 8 et la lèvre périphérique 7 recouvre encore la pièce de liaison 8.

On voit sur les figures 7, 8 et 9 le rôle des languettes 5 élastiques de rattrapage de jeu qui repoussent toujours la plaque 2 contre le support qui, dans notre exemple, est la porte coulissante 9. Comme, de plus, la lèvre périphérique 7 recouvre toujours, quel que soit le cas de montage, la pièce de liaison 8, la mise en place du joint 1 est ainsi parfaitement assurée. Le joint 1 peut ainsi remplir ses fonctions d'étanchéité et de présentation.

La figure 10 représente un autre exemple de réalisation d'un joint à rattrapage de jeu 20 suivant l'invention dans lequel il y a quatre languettes 21 élastiques de rattrapage de jeu.

## Revendications

1. Joint à rattrapage de jeu variable destiné à être interposé entre deux surfaces en regard l'une de l'autre d'un élément support (9), en particulier une tôle de carrosserie automobile, et d'une pièce à monter (8), la pièce à monter (8) comportant une semelle de fixation (10) destinée à être serrée sur l'élément support (9) selon un plan non parallèle au plan de joint entre lesdites surfaces, caractérisé en ce que ledit joint (1) est constitué d'une plaque (2) comportant:

a) une lumière (3) de passage de la semelle de fixation (10);

b) au moins trois languettes élastiques (5) faisant saillie d'une première face de la plaque (2) et destinées à prendre appui sur la pièce (8) pour plaquer la deuxième face de la plaque (2) contre l'élément support (9);

c) une lèvre périphérique (7) faisant saillie de ladite première face de la plaque (2) et destinée à entourer au moins partiellement la pièce à monter pour faire office de barrière d'étanchéité et de cache du plan de joint, la hauteur de ladite lèvre (7) étant supérieure à la valeur maximale possible du jeu entre la pièce à monter (8) et l'élément support (9).

2. Joint à rattrapage de jeu variable selon la revendication 1, caractérisé en ce que les languettes (5) sont constituées d'un élément bombé à profil circulaire raccordé au plan du joint par un seul côté (6).

3. Joint à rattrapage de jeu variable selon l'une des revendications précédentes, caractérisé en ce que ledit joint (20) comporte quatre languettes (21) de rattrapage de jeu.

4. Joint à rattrapage de jeu variable selon l'une des caractéristiques précédentes, caractérisé en ce que ledit joint en matière plastique est obtenu directement par moulage.

## Patentansprüche

1. Nachstelldichtungsscheibe zum Einbau zwischen zwei sich gegenüberliegenden Flächen einer Haltestruktur (9), insbesondere eines Kraftfahrzeug-Karossereiblechs und einem anzubringenden Teil (8), wobei das anzubringende Teil (8) eine Befestigungslasche (10) aufweist, zum Befestigen an der Haltestruktur (9) in einer Ebene, die nicht parallel zur Dichtungsebene zwischen den Flächen ist, dadurch gekennzeichnet, daß die Dichtung (1) aus einer Platte (2) besteht, die Folgendes aufweist:

a) eine Durchtrittsöffnung (3) für die Befestigungslasche (10),

b) wenigstens drei elastische Zungen (5), die aus einer ersten Seite der Platte (2) hervorstehen um sich auf dem Teil (8) abzustützen und derart die zweite Seite der Platte (2) gegen die Haltestruktur (9) drücken,

c) eine Umfangslippe (7), die aus der ersten Seite der Platte (2) hervorsteht und dazu bestimmt ist, wenigstens teilweise das anzubringende Teil zu umgeben, um so einen Dichtungswulst und eine Abdeckung für die Dichtungsebene zu bilden, wobei die Höhe der Lippe (7) größer als der mögliche Maximalwert des Spiels zwischen dem anzubringenden Teil (8) und der Haltestruktur (9) ist.

2. Nachstelldichtungsscheibe nach Anspruch 1, dadurch gekennzeichnet, daß die Zungen (5) aus einem gewölbten Teil mit kreisförmigem Profil bestehen, das mit der Dichtungsebene über eine einzige Seite (6) verbunden ist.

3. Nachstelldichtungsscheibe nach einem der vorhergehenden Ansprüche, dadurch gekennzeichnet, daß die Dichtung (20) vier Spielausgleichszungen (21) aufweist.

4. Nachstelldichtungsscheibe nach einem der vorhergehenden Ansprüche, dadurch gekennzeichnet, daß die Dichtung aus einem Kunststoff direkt durch einen Gießvorgang erhalten ist.

## Claims

1. A joint which is capable of taking up variable clearance and which is intended to be interposed between two mutually facing surfaces of a support element (9), in particular a motor vehicle body panel, and a member (8) to be fitted, the member (8) to be fitted comprising a fixing plate portion (10) which is intended to be clamped to the support element (9) along a plane which is not parallel to the plane of the junction between said surfaces, characterised in that said joint (1) comprises a plate portion (2) including:

a) an aperture (3) for the fixing plate portion (10) to pass therethrough;
b) at least three resilient tongue portions (5) which project from a first face of the plate portion (2) and which are intended to bear against the member (8) to press the second face of the plate portion (2) against the support element (9); and

c) a peripheral lip (7) which projects from said first face of the plate portion (2) and which is intended at least partially to surround the member to be fitted to act as a sealing barrier means and to mask the plane of the junction between said surfaces, the height of said lip (7) being greater than the maximum possible value of the clearance between the member (8) to be fitted and the support element (9).

2. A joint which is capable of taking up variable clearance, according to claim 1, characterised in that the tongue portions (5) are formed by an element which is curved, with a circular configuration, and which is connected to the plane of the joint at a single side (6).

3. A joint which is capable of taking up variable clearance, according to one of the preceding claims, characterised in that said joint (20) has four clearance take-up tongue portions (21).

4. A joint which is capable of taking up variable clearance, according to one of the preceding claims, characterised in that said joint which comprises plastics material is produced directly by moulding.

## FIG_1

## FIG_2

## FIG_3

FIG_4

FIG_5

FIG_6

FIG_7

FIG_8

FIG_9

FIG_10

2